# EUROPEAN PATENT APPLICATION

(11) **EP 4 202 606 A1**
(43) Date of publication of application: **28.06.2023**
(21) Application number: 21216253.1
(22) Date of filing: 21.12.2021
(51) Int. Cl.: G06F 3/01, G06F 3/041

(54) **USER-DEVICE INTERACTION**

(71) Applicant: Nokia Technologies Oy, 02610 Espoo (FI)
(72) Inventor: ZHENG, Mingde, Basking Ridge 08807 (US); KIM, John, Bridgewater 08807 (US)
(74) Representative: Nokia EPO representatives

(57) **Abstract**

An apparatus for providing an haptic effect on a touch screen device comprising means for:
determining a touch on a surface of a device by a portion of a user's body;
causing, based at least in part on the determined touch, providing of at least one calibration signal to at least one electrode, wherein the at least one calibration signal comprises an alternating waveform;
determining, based at least in part on the at least one calibration signal, an electrical impedance of the portion of the user's body; and
causing providing of at least one stimulation signal to the portion of the user's body, wherein the at least one stimulation signal is configured based, at least in part, on the determined electrical impedance.

## Description

### TECHNOLOGICAL FIELD

Embodiments of the present disclosure relate to user-device interaction. Some relate to user-device interaction in haptic devices.

### BACKGROUND

Some electronic devices, such as some mobile devices, are configured to interact with a user, for example, by providing haptic outputs.

It would be desirable to improve interactions between an electronic device and a user.

### BRIEF SUMMARY

In a first aspect there is provided an apparatus comprising means for: determining a touch on a surface of a device by a portion of a user's body; causing, based at least in part on the determined touch, providing of at least one calibration signal to at least one electrode, wherein the at least one calibration signal comprises an alternating waveform; determining, based at least in part on the at least one calibration signal, an electrical impedance of the portion of the user's body; and causing providing of at least one stimulation signal to the portion of the user's body, wherein the at least one stimulation signal is configured based, at least in part, on the determined electrical impedance.

In a second aspect, there is provided a method comprising: determining a touch on a surface of a device by a portion of a user's body; causing, based at least in part on the determined touch, providing of at least one calibration signal to at least one electrode, wherein the at least one calibration signal comprises an alternating waveform; determining, based at least in part on the at least one calibration signal, an electrical impedance of the portion of the user's body; and causing providing of at least one stimulation signal to the portion of the user's body, wherein the at least one stimulation signal is configured based, at least in part, on the determined electrical impedance.

In a third aspect there is provided a computer program comprising instructions for causing an apparatus to perform: determining a touch on a surface of a device by a portion of a user's body; causing, based at least in part on the determined touch, providing of at least one calibration signal to at least one electrode, wherein the at least one calibration signal comprises an alternating waveform; determining, based at least in part on the at least one calibration signal, an electrical impedance of the portion of the user's body; and causing providing of at least one stimulation signal to the portion of the user's body, wherein the at least one stimulation signal is configured based, at least in part, on the determined electrical impedance.

Also disclosed is a computer-readable medium (such as a non-transitory computer-readable medium) comprising program instructions stored thereon for performing at least the following: determining a touch on a surface of a device by a portion of a user's body; causing, based at least in part on the determined touch, providing of at least one calibration signal to at least one electrode, wherein the at least one calibration signal comprises an alternating waveform; determining, based at least in part on the at least one calibration signal, an electrical impedance of the portion of the user's body; and causing providing of at least one stimulation signal to the portion of the user's body, wherein the at least one stimulation signal is configured based, at least in part, on the determined electrical impedance.

Also disclosed is an apparatus comprising: at least one processor; and at least one memory including computer program code which, when executed by the at least one processor, causes the apparatus to: determine a touch on a surface of a device by a portion of a user's body; cause, based at least in part on the determined touch, providing of at least one calibration signal to at least one electrode, wherein the at least one calibration signal comprises an alternating waveform; determinine, based at least in part on the at least one calibration signal, an electrical impedance of the portion of the user's body; and cause providing of at least one stimulation signal to the portion of the user's body, wherein the at least one stimulation signal is configured based, at least in part, on the determined electrical impedance.

According to various, but not necessarily all, embodiments there are provided examples as claimed in the appended claims.

The description of a function and/or action should additionally be considered to also disclose any means suitable for performing that function and/or action.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7A shows another example of the subject matter described herein; and
FIG. 7B shows another example of the subject matter described herein.

### DETAILED DESCRIPTION

Example of the disclosure relate to apparatus, methods and/or computer program for and/or involved in user-device interactions.

Some examples of the disclosure relate to apparatus, methods and/or computer programs for enabling and/or configured to enable haptic output from an electronic device.

The following description and FIGs describe various examples of an apparatus 10 comprising means for:
determining a touch 12 on a surface 14 of a device 16 by a portion of a user's body 18;
causing, based at least in part on the determined touch 12, providing of at least one calibration signal 20 to at least one electrode 22, wherein the at least one calibration signal 20 comprises an alternating waveform 24;
determining, based at least in part on the at least one calibration signal 20, an electrical impedance on the portion of the user's body 18; and
causing providing of at least one stimulation signal 26 to the portion of the user's body 18, wherein the at least one stimulation signal 26 is configured based, at least in part, on the determined electrical impedance.

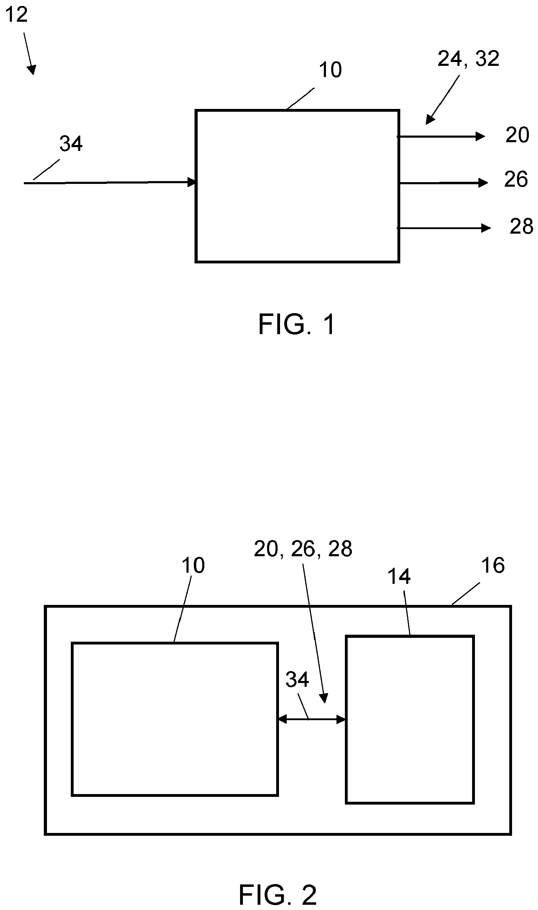

FIG.1 schematically illustrates an example of an apparatus 10.

The various FIGs illustrated and described herein are not to scale.

The apparatus 10 can be comprised and/or integrated in a device 16, such as an electronic device 16. See for example, FIG. 2.

In examples, the apparatus 10 is configured to determine a touch 12 on a surface 14 of a device 16 by a portion of a user's body 18.

As used herein, the term "determining" (and grammatical variants thereof) can include, at least: calculating, computing, processing, deriving, investigating, looking up (for example, looking up in a table, a database or another data structure), ascertaining and the like. Also, "determining" can include receiving (for example, receiving information), accessing (for example, accessing data in a memory) and the like. Also, "determining" can include resolving, selecting, choosing, establishing, and the like.

Determining a touch 12 on a surface 14 of a device 16 by a portion of a user's body 18 can comprise receiving one or more signals 34. This is indicated in the example of FIG. 1 by the arrow pointing towards the apparatus 10.

In examples, the one or more signals 34 are caused and/or generated by the touch 12.

The apparatus 10 can be configured to process the one or more signals 34 to determine the touch 12.

In some examples, the apparatus 10 is configured to cause, based at least in part on the determined touch 12, providing of at least one calibration signal 20 to at least one electrode 22, wherein the at least one calibration signal 20 comprises an alternating waveform 24.

In examples, the at least one calibration signal 20 comprises a plurality of discrete time-separated alternating waveforms 24.

In some examples, the at least one calibration signal 20 comprises an alternating waveform 24 having a frequency in the range 40 to 60 kHz and a duration of up to 100 ms.

In examples, the at least one calibration signal 20 is configured for performance of electrical impedance spectroscopy of the portion of the user's body 18.

In examples, causing providing of at least one calibration signal 20 comprises varying one or more characteristics 32 of the alternating waveform 24.

In examples, the apparatus 10 is configured to determine at least one user input configured to start calibration and wherein determining a touch 12 on a surface 14 of a device 16 is based, at least in part, on the at least one user input.

In examples, the apparatus 10 is configured to determine, based at least in part on the at least one calibration signal 20, an electrical impedance of the portion of the user's body 18.

In examples, determining an electrical impedance of the portion of the user's body 18 comprises determining an average electrical impedance of the portion of the user's body 18 based, at least in part, on the plurality of discrete time-separated alternating waveforms 24.

In examples, the apparatus 10 is configured to cause providing of at least one stimulation signal 26 to the portion of the user's body 18, wherein the at least one stimulation signal 26 is configured based, at least in part, on the determined electrical impedance.

In examples, the at least one stimulation signal 26 is configured to stimulate one or more predetermined nerve endings in the portion of the user's body.

In examples, the apparatus 10 is configured to cause providing of at least one further stimulation signal 28 after causing providing of the at least one stimulation signal 26, the at least one further stimulation signal 28 based, at least in part, on the determined electrical impedance.

The apparatus 10 can be separate from the device 16. In some examples, the apparatus 10 is located in and/or integrated with the device 16.

The apparatus 10 can comprise any number of additional elements not illustrated in the example of FIG. 1.

FIG. 2 schematically illustrates an example of a device 16. In the example of FIG. 2 the device 16 is an electronic device 16.

In the illustrated example, the device 16 comprises a surface 14 configured for user touch and an apparatus 10 as described in relation to FIG. 1 and/or as described herein.

Accordingly, FIG. 2 illustrates an electronic device 16 comprising an apparatus 10 as described herein and at least one surface 14 configured for user touch.

The electronic device 16 can comprise any suitable electronic device 16. For example, the electronic device 16 can comprise any personal user device and/or any suitable mobile device and/or any suitable wearable device and so on. For example, the electronic device 16 can comprise a mobile phone.

The electronic device 16 can be considered an apparatus.

The device 16 can comprise any suitable surface 14 configured for user touch. For example, the device 16 can comprise any suitable surface 14 configured to receive and/or detect and/or determine a user touch on the surface 14. For example, the device 16 can comprise any suitable touch sensitive surface, such as a touch sensitive panel and/or a touch sensitive display and so on.

Signals 34 can be transmitted and/or sent between the apparatus 10 and the at least one surface 14 configured for user touch. This is indicated in the example of FIG. 2 by the double headed arrow between the apparatus 10 and the at least one surface 14 configured for user touch.

For example, the apparatus 10 can receive one or more signals 34 from the surface 14 to allow a determination of the touch 12 on the surface 14.

In examples, the surface 14 is configured to provide haptic feedback to the user. Accordingly, in examples, the surface 14 is configured for user touch and to provide haptic feedback to the user.

The surface 14 can be considered a combined sensing and stimulation surface 14.

The surface 14 can comprise a non-display surface and/or a display surface.

Accordingly, the surface 14 can comprise a combination of display and non-display surfaces. For example, the surface 14 could comprise the front and back of a mobile phone, with only the front of the mobile phone including a display.

The apparatus 10 can transmit and/or send one or more calibration signals 20, and/or one or more stimulation signals 26, 28 to the surface 14.

The device 16 can comprise any number of additional elements not illustrated in the example of FIG. 2. For example, the device 16 can comprise one or more displays.

Additionally, or alternatively, one or more elements of the device 16 illustrated in the example of FIG.2 can be integrated and/or combined.

As illustrated in the example of FIG. 2, the apparatus 10 and the surface 14 are operationally coupled and any number or combination of intervening elements can exist between them (including no intervening elements).

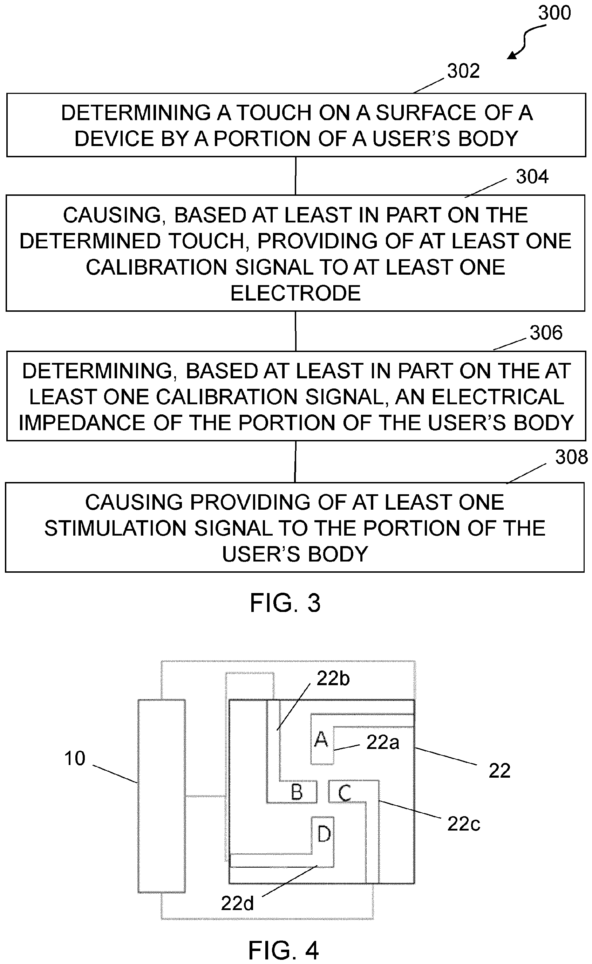

FIG. 3 illustrates an example of a method 300.

One or more features discussed in relation to FIG. 3 can be found in one or more of the other figures. During discussion of FIG. 3, reference will be made to other figures for the purposes of explanation.

In examples, method 300 is a method 300 of enhancing and/or improving user-device interaction.

In examples, method 300 is a method 300 of enhancing and/or improving haptic outputs.

In examples, method 300 is a method 300 of calibrating user-device interaction.

In examples, method 300 is a method 300 of calibrating haptic output.

Method 300 can be performed by any suitable apparatus comprising any suitable means for performing the method 300, and/or any suitable apparatus configured to perform the method 300.

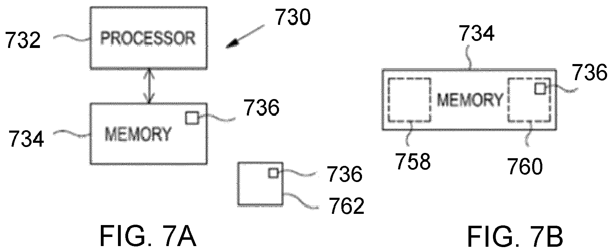

Method 300 can be performed by the apparatus of FIGs 7A and 7B, and/or the apparatus 10 of FIG. 1 and/or the device 16 of FIG. 2.

At block 302, method 300 comprises determining a touch 12 on a surface 14 of a device 16 by a portion of a user's body 18.

Determining a touch 12 on a surface 14 of a device 16 by a portion of a user's body 18 can be performed in any suitable way using any suitable method.

Any suitable surface 14 of any suitable device 16 can be used. For example, any suitable surface 14 configured for user touch, and/or any suitable touch sensitive surface, and/or any suitable surface 14 configured to receive input touch stimulus from a user can be used.

The surface 14 can be configured in any suitable way. In some examples, the surface 14 can be configured to operate with any suitable touch sensitive mechanism and/or technology and/or principle. For example, the surface 14 can be configured for capacitive-based, resistive-based, and/or pressure-based touch sensing and so on.

In examples, determining a touch 12 on a surface 14 of a device 16 by a portion of a user's body 18 comprises receiving one or more signals 34 caused by and/or generated by and/or resulting from the touch 12 on the surface 14 of the device 16 by the portion of the user's body 18.

In examples, determining a touch 12 on a surface 14 of a device 16 by a portion of a user's body 18 comprises processing one or more signals 34 caused by and/or generated by and/or resulting from the touch 12 on the surface 14 of the device 16 by the portion of the user's body 18.

The device 16 can be any suitable device 16, for example any suitable electronic device 16. See, for example, FIG. 2.

A touch 12 by a portion of a user's body 18 can be considered any suitable approach between the portion of a user's body 18 and the surface 14 of the device 16 that can be detected and/or determined by and/or via the surface 14.

A touch 12 by a portion of a user's body 18 can be considered any suitable contact between the portion of a user's body 18 and the surface 14 of the device 16 that can be detected and/or determined by and/or via the surface 14.

Any suitable portion of a user's body 18 can be used. In some examples, any suitable portion of a user's body 18 that can be used to touch a surface 14 of a device 16 can be used. For example, any suitable portion of a user's hand can be used, such as one or more fingertips, a palm and so on.

At block 304, method 300 comprises causing, based at least in part on the determined touch 12, providing at least one calibration signal 20 to at least one electrode 22, wherein the at least one calibration signal 20 comprises an alternating waveform 24. As used herein, causing an action, for example a function of a device, should be considered to also disclose and/or include performing the action. For example, causing providing at least one calibration signal 20 should be considered to also disclose and/or include providing at least one calibration signal 20.

In some examples, block 304 comprises causing, in dependence on, and/or in response to the determined touch 12, providing at least one calibration signal 20 to at least one electrode 22.

Tthe determined touch 12 can be considered a trigger for providing the at least one calibration signal 20.

The at least one calibration signal 20 can have any suitable form comprising an alternating waveform 24. For example, the at least one calibration signal 20 can have any suitable form comprising an alternating waveform 24 to allow calibration to be performed for, and/or in relation to, and/or to enhance/improve providing at least one stimulation signal 26. See, for example, block 308.

The at least one stimulation signal 26 can be configured to provide electrotactile output.

In some examples, the at least one calibration signal 20 is configured to allow a determination of an electrical impedance of the portion of the user's body 18.

In some examples, the at least one calibration signal 20 is configured for performance of electrical impedance spectroscopy of the portion of the user's body 18.

Accordingly, electrical impedance of the portion of the user's body 18 can be determined, rather than, for example, electrical resistance when using a pulsed form, or non-alternating waveform, for a calibration signal 20.

In some examples, block 304 comprises controlling, based at least in part on the determined touch 12, electric current provided to at least one electrode 22 according to and/or in the form of an alternating waveform 24.

An alternating waveform 24 can be considered to be a waveform having an amplitude that varies repeatedly between an upper limit a lower limit.

An alternating waveform 24 can have a periodicity that varies consistently between two discrete time points in a continuous manner.

An alternating waveform 24 can have a predefined shape, such as a sine wave, square wave, or triangle wave and so on.

In some examples, an alternating waveform 24 can be described by characteristics 32. In examples, characteristics of an alternating waveform 24 can be considered defined parameters. For example, an alternating waveform 24 can be described by frequency, amplitude, shape, modulation envelope, and/or duty cycles.

For example, an alternating waveform 24 can comprise a sine wave.

In some examples, the amplitude of the waveform 24 does not change polarity. Accordingly, electrical current provided according to the waveform 24 is in a single direction, varies repeatedly in amplitude and does not change direction.

The waveform can comprise an offset so that the polarity of the waveform does not change.

The at least one calibration signal 20 can comprise an alternating waveform 24 having a frequency in the kHx range.

In some examples, the at least one calibration signal 20 can comprise an alternating waveform 24 having a frequency in the range 40 to 60 kHz and a duration of up to 100 milliseconds.

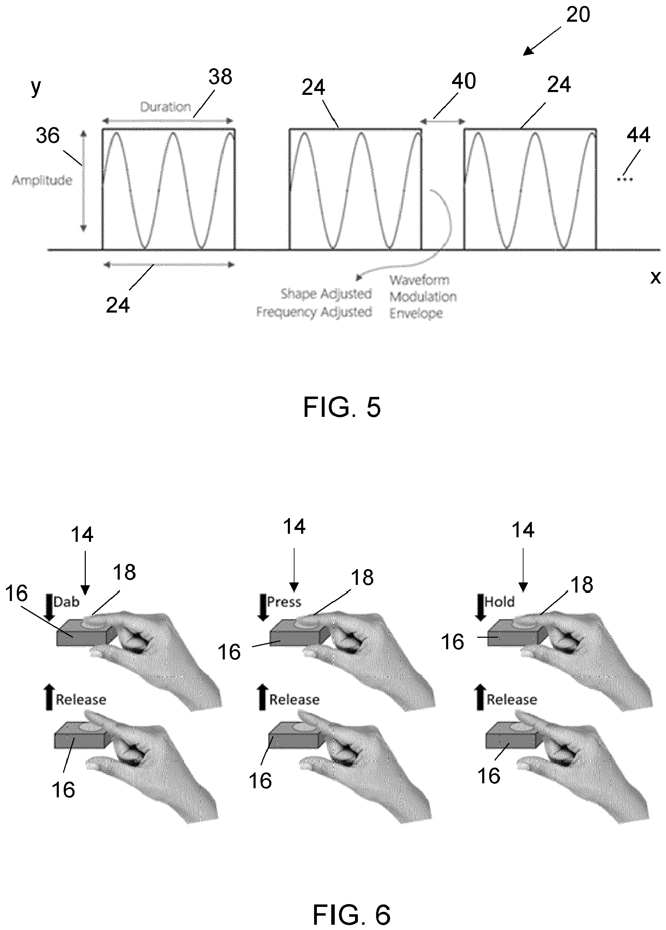

By way of example, reference is made to FIG. 5.

FIG. 5 illustrates an example of at least one calibration signal 20. In examples, FIG. 5 can be considered to illustrate a plurality of calibration signals 20.

In the example of FIG. 5, time increases to the right along the x-axis and amplitude increase upwards along the y-axis.

Referring to the left portion of the example of FIG.5, an example of an alternating waveform 24 is illustrated. In the example of FIG. 5 the waveform 24 has the form of a sine wave with a defined amplitude 36 and duration 38.

In some examples, the at least one calibration signal 20 comprises a plurality of discrete time-separated alternating waveforms 24.

Referring again to the example of FIG. 5, in this example, the at least one calibration signal 20 comprises three alternating waveforms 24 separated by a gap 40 in the time direction.

In the illustrated example, waveform modulation envelope refers to the "box" that encompasses the sine wave. This envelope can modify the sinewave within to have different amplitude and duration.

The shape of the modulation "box" can take different forms, such as a square box as in the example of FIG. 5, or rectangular, or sawtooth/triangle, and so on.

When the shape of the waveform modulation envelope, it means that a fixed encapsulating form has been selected for the train of impulses, and when it is frequency adjusted, it means the duration of the waveform modulation envelope is fixed.

In the illustrated example, because of the tunability of the encapsulating boxes of sine waves, the time gap 40 depends on the duration of each box. For calibration purpose, this duration gap can be fixed in a short time window of a few microseconds to tens of microseconds.

However, for stimulation purposes, this time gap is a dynamic parameter, meaning, this will be translated to how "frequent" the sensation is generated for the user. For example, a single tap on the skin or a sequence of taps on the skin with a time gap 40 of a range between milliseconds (for rapid sensation of vibration for an instance) or a range of seconds (for slower repetitive feeling of say someone poking you repeatedly).

Although three discrete time-separated alternating waveforms 24 are illustrated in the example of FIG. 5, any suitable number of discrete time-separated waveforms 24 can be used. This is indicated by the ellipsis 44 in the example of FIG. 5.

In some examples, causing providing of at least one calibration signal 20 comprises varying one or more characteristics 32 of the alternating waveform 24.

For example, varying at least one of frequency, amplitude, waveform and/or duty cycles and so on.

In some examples, utilizing an alternating waveform (for example a sine wave) with an imperceptible amplitude and duration adjusted to obtain pathlength impedance information from electrode 22 to the nerve ending mechanoreceptor of interest, the correct, pathlength adjusted impedance can thus be obtained.

Pathlength can be from the interface of the electrode 22 to the skin tissue layer where a target sensory receptor of interest is located.

An imperceptible amplitude can be considered an amplitude such that the stimulation from the waveform is imperceptible to the user.

For example, at low frequency such as 1-2 Hz, skin surface variation such as moisture content is measured. However, when extended further to higher frequencies, different depth of measurements are included.

The at least one electrode 22 can have any suitable form. For example, the at least one electrode 22 can have any suitable form to provide and/or deliver the at least one calibration signal 20 to the portion of the user's body 18.

For example, the at least one electrode 22 can have any suitable shape and/or size to provide and/or deliver the at least one calibration signal 20 to the portion of the user's body 18.

For example, the at least on electrode 22 can comprise any suitable material or materials, such as any suitable conductive material, such as any suitable metal.

Any suitable conductive two dimensional or three-dimensional structure can be used.

In some examples, the surface 14 of the device 16 comprises a plurality of electrodes 22 and block 304 can be considered to comprise causing, based at least in part on the determined touch 12, providing of at least one calibration signal 20, comprising an alternating waveform 24, to at least one electrode 22 that is located and/or positioned in contact with the portion of the user's body 18, to allow the at least one calibration signal 20 to be provided and/or delivered to the portion of the user's body 18.

By way of example, reference if made to the example of FIG. 4.

FIG. 4 schematically illustrates a plurality of electrodes 22a to 22d operationally connected to an apparatus 10. In the example of FIG. 4 the apparatus 10 comprises an apparatus 10 as illustrated in FIG. 1 and/or FIG.2 and/or as described herein.

In the example of FIG. 4, four electrodes 22a, 22b, 22c and 22d are illustrated. The electrodes 22a to 22d have a substantially 'L' shape in different orientations.

At least one calibration signal 20 can be provided to any suitable electrode 22a to 22d and/or combination of electrodes 22a-22d illustrated in the example of FIG. 4.

For example, the at least one calibration signal 20 can be provided to electrode 22a and/or electrode 22b and/or electrode 22c and/or electrode 22d.

In some examples, one or more electrodes 22 are configured to receive one or more signals 34 caused by and/or resulting from providing the at least one calibration signal 20 to the at least one electrode 22.

For example, one or more electrodes 22 are configured to receive one or more signals 34 caused by and/or resulting from the at least one calibration signal 20 being provided to and/or passing through at least part of the portion of the user's body 18. See, for example, block 306.

Referring to the example of FIG. 4, the at least one calibration signal 20 can be provided to electrode 22a and one or more signals can be received by at least one of electrodes 22a to 22c after passing through at least part of the portion of the user's body 18. However, the at least one calibration signal 20 can be provided to any of the electrodes 22a to 22d and one or more signals received by any other electrodes 22a to 22d after passing through the portion of the user's body 18.

In the example of FIG. 4, it can be considered that two pairs of planar 2D electrodes 22 are arranged in a way as shown in FIG. 4. In the illustrated example, upon contact and compression of a fingertip, for example, on a grid with the embedded 4 electrodes (square box), a measurable amount of resistance or capacitance or impedance is obtained by a sensing circuit, based on the pre-established threshold of detection, the dosage of stimulation to be supplied to either the same pair of sensing electrodes (electrodes 22a & 22b) or electrodes 22c & 22d, or varying of these combinations, can be determined. See, for example, blocks 306 and 308.

Referring to the example of FIG. 3, at block 306 method 300 comprises determining, based at least in part on the at least one calibration signal 20, an electrical impedance of the portion of the user's body 18.

Determining, based at least in part on the at least one calibration signal 20, an electrical impedance of the portion of the user's body 18 can be performed in any suitable way using any suitable method.

In some examples, determining, based at least in part on the at least one calibration signal 20, an electrical impedance of the portion of the user's body 18 comprises analysing and/or processing one or more signals 34 received from one or more electrodes 22.

In some examples, the one or more signals 34 are caused and/or generated by and/or result from the at least one calibration signal 20 being provided to and/or passing through the portion of the user's body 18.

For example, in the example of FIG. 4, the one or more signals 34 can be received via electrode(s) 22b, 22c, and/or 22d after the at least one calibration signal 20 provided to electrode 22a and passes through the portion of the user's body 18 to reach one or more of the other electrodes 22b, 22c and/or 22d.

In some examples, determining, based at least in part on the at least one calibration signal 20, an electrical impedance of the portion of the user's body 18 comprises performing electrical impedance spectroscopy.

For example, performing electrical impedance spectroscopy can comprise performing electrical impedance spectroscopy on and/or in relation to one or more signals 34 caused and/or generated by and/or resulting from the at least one calibration signal 20 being provided to and/or passing through the portion of the user's body 18.

The impedance variability of the skin for electrotactile sensors is due not only to sweat, but also attributed to the composition and conditions of the skin across different populations, different makeup, thickness, conditions (callused or swollen, or damaged), and certainly moisture content can cause interfacial (electrode-skin) and intrafacial (within skin) impedance variability.

The method 300 involving the at least one calibration signal 20 can be considered interrogative in nature in which an alternating waveform 24 of specific frequency, amplitude, waveform, duty cycles, and so on is applied to measured accumulative impedance of the skin layers (from electrode to selected mechanoreceptor depth).

As described herein, an alternating waveform 24 of prescribed parameters such as amplitude and frequency is provided to the skin, and this current interacts with the skin tissue at various "resistance" with real and quadrature information, forming a voltage magnitude of a complex form that is read and translated to become an impedance value.

As discussed in relation to block 304, in examples, the at least one calibration signal comprises a plurality of discrete time-separated alternating waveforms 24.

In some examples, determining an electrical impedance of the portion of the user's body 18 comprises determining an average electrical impedance of the portion of the user's body 18 based, at least in part, on the plurality of discrete time-separated alternating waveforms 24.

For example, in the example of FIG. 5, an average electrical impedance of the portion of the user's body 18 can be determined based, at least in part, on the three illustrated alternating waveforms 24.

Any suitable average and/or averaging method can be used.

Block 302, 304 and 306 can be considered a calibration, and/or a calibration method, and/or a calibration routine and so on.

Referring to FIG. 3, at block 308 method 300 comprises causing providing of at least one stimulation signal 26 to the portion of the user's body 18, wherein the at least one stimulation signal 26 is configured based, at least in part, on the determined electrical impedance.

Consequently, FIG. 3 illustrates a method 300 comprising:
determining a touch 12 on a surface 14 of a device 16 by a portion of a user's body 18;
causing, based at least in part on the determined touch 12, providing of at least one calibration signal 20 to at least one electrode 22, wherein the at least one calibration signal 20 comprises and alternating waveform 24;
determining, based at least in part on the at least one calibration signal 20, an electrical impedance of the portion of the user's body 18; and
causing providing of at least one stimulation signal 26 to the portion of the user's body 18, wherein the at least one stimulation signal 26 is configured based, at least in part, on the determined electrical impedance.

Any suitable stimulation signal 26 configured based, at least in part, on the determined electrical impedance can be used.

Any suitable stimulation signal 26 configured for and/or to provide electrotactile stimulation, based, at least in part, on the determined electrical impedance can be used.

The at least one stimulation signal 26 can have any suitable form. For example, the at least on stimulation signal 26 can have any suitable form to provide electrotactile stimulation.

In some examples, the at least one stimulation signal 26 comprises an alternating waveform 24.

The at least one stimulation signal 26 can be described by characteristics and/or defined parameters. For example, the at least one stimulation signal 26 can be described by frequency, amplitude, waveform, and/or duty cycles.

For example, for stimulation purposes, a time gap can be a dynamic parameter, meaning, this will be translated to how "frequent" the sensation is generated for the user.

The at least one stimulation signal 26 can be configured based, at least in part, on the determined electrical impedance to provide and/or to deliver an intended stimulation and/or sensation to a user and/or the portion of a user's body 18.

In some examples, the at least one stimulation signal 26 is configured and/or adjusted and/or determined based, at least in part, on the determined electrical impedance to calibrate the at least one stimulation signal 26 to allow an intended stimulation and/or electrotactile stimulation to be provided to the user.

One or more characteristics of the at least one stimulation signal 26 can be configured, and/or determined, and/or adjusted based, at least in part, on the determined electrical impedance. For example, a frequency and/or amplitude of the at least one stimulation signal 26 can be configured, and/or determined, and/or adjusted based, at least in part, on the determined electrical impedance.

In some examples, this allows, for example, a particular electrical impedance of a portion of a user's body to be compensated and/or calibrated for to allow an intended and/or predetermined stimulation, such as electrotactile stimulation, to be provided to the portion of the user's body 18.

This provides, for example, user-specific calibration.

In some examples, in order to compensate for the temporal transducer-skin variance across the general population (inter-session consistency), and across the same individual (intra-session consistency) during the different times of operation, the interfacial impedance is calibrated to ensure consistent sensation received by the user.

The calibration can be used to compensate for high and variable skin impedance that contributes to sensor noise and dampens or interferes with stimulation amplitude and intensity.

However, at the fingertips, for example, the magnitude and variance is significantly lower compared to other aeras of the body due to the high density of sweat glands and therefore moisture content present.

In some examples, the extent or magnitude of this readily available "wetness" can be characterized as linearly proportional to the contact duration with an object, such as the surface 14, as long as the object's condition (for example temperature) holds constant for the duration of the interaction.

The longer the portion of the user's body 18, for example fingertip, is in contact with a mobile phone screen, the smaller the interfacial impedance.

If consistent finger-screen contact duration is expected, consistent interfacial impedance can be anticipated and compensated accordingly. In examples, exact impedance compensation needs not be stringent, since a minor impedance offset may not contribute significantly to the sensor or stimulation circuit.

However, in some examples, as a reinforcement technique to ensure dynamic interfacial impedance compensation, based on the frequency in which the contact duration is established between the user finger and surface 14 (after some time has passed), Artificial Intelligence using Machine Learning approaches can be utilized to predict user interaction behaviors and correct for any impedance offsets.

In some examples, the at least one stimulation signal 26 is different to the at least one calibration signal 20. For example, one or more characteristics of the at least one calibration signal 20 can be different with regard to the at least one stimulation signal 26.

In some examples, the at least one stimulation signal 26 is provided to one or more electrodes 22. In examples, the one or more electrodes 22 used in relation to the at least one stimulation signal 26 can be different or the same as one or more electrodes 22 used in relation to the at least one calibration signal 20.

For example, in the example of FIG. 4, electrodes 22a and 22b can be used in relation to the at least one calibration signal 20 and determining an electrical impedance of the portion of the user's body 18, and electrodes 22c and 22d can be used in relation to providing the at least one stimulation signal 26 to the portion of the user's body 18.

However, any suitable electrode(s) having any suitable form can be used to provide the at least one stimulation signal 26 to the portion of the user's body 18.

In some examples, the at least one stimulation signal 26 is configured to stimulate one or more predetermined nerve endings in the portion of the user's body 18. For example, the at least one stimulation signal 26 is configured to stimulate one or more nerve endings in a hand, and/or finger, and/or fingertip of a user.

The at least one stimulation signal 26 can be configured in any suitable way to stimulate one or more predetermined nerve endings in the portion of the user's body 18. For example, one or more characteristics and/or parameters of the at least one stimulation signal 26 can be determined and/or configured to stimulate one or more predetermined nerve endings in the portion of the user's body 18.

The frequency and/or amplitude of the at least one stimulation signal 26 can be configured to stimulate one or more predetermined nerve endings in the portion of the user's body 18.

The at least one stimulus signal 26 can be tuned to target different sensations. In examples, this can be done by adjusting the electrical current parameters and output to match sensation nerve endings of interest.

In some examples, to target nerve endings, for example vibration-responsible Pacinian Corpuscle mechanoreceptors, the stimulation signal(s) 26 (for example shape and configuration) and parameters (for example, frequency, duration, cycle, and intensity) are adjusted according to the physiological response of these mechanoreceptors.

For example, activating frequency of Pacinian corpuscle receptors is between 100 - 300 Hz, and from the inventors' experiments it has been determined that a biphasic alternating square wave at the proper intensity and duration can be used to activate the vibration sensation.

Depending on the returned impedance measurement throughout the skin depth, stimulation intensity and duration can be set to initiate the vibration, however, to continuously evoke a pattern of vibrational feel, the cycle of operation is programmed, otherwise a user will only have an instantaneous feeling of vibration.

In some examples, the shape and configuration of the waveform of the stimulation signal(s) 26 also provides an optimal penetrative method to activate different sensation nerve endings.

Examples of the disclosure, using calibration signal(s) 20 to determine electrical impedance to allow calibration/compensation take these physiological target properties into account.

This allows, for example, a differentiable sensation that isn't varying or changing with time and people having different skin composition to be created.

In some examples, the at least one stimulation signal 26 functions to produce perceptional stimulus to the user to elicit tactile sensation. For example, vibration is one of the readily available and replicable sensation target, amongst other simple tactile sensations such as pressure, and the combination of these two.

The mechanism of implementation can be dictated by the combination of transducer materials that delivers the stimulation and electronic circuits that provide the waveform and magnitude of the at least one stimulation signal 26.

In some examples, the operation principle follows that of a voltage-controlled current stimulation to generate anodoic or cathodic waveforms at the defined gating frequency to consequently depolarizes the nerve endings of the Meissner's corpuscles receptors.

In some examples, the at least one stimulation signal 26 comprises monophasic, biphasic or multi-phasic waveforms, which can, for example, be generated with a digital waveform synthesizer.

Due to the proximity of targeted sensation receptors directly beneath the skin, small current amplitude in the range of 10-1000 micro-amperes can be employed to evoke noticeable vibrational sensation, given the conditions of their emission frequency, rest intervals and peak-to-peak cycles.

In some examples, the transducing element of a stimulation layer of a device 16 can be conducted through the same conductive 2D or 3D elements as used in determining a touch 12, which can be comprised in a sensory layer.

Accordingly, in examples, a mutual transducing element serves the dual role of sensing and stimulation via time-multiplexed manner (sequential or offset temporal).

Each electrode 22 can be programmed digitally to function as either a sensing or stimulating electrode, thereby allowing flexible and highly customisable patterns to be made available, for any applications.

In some examples, method 300 comprises causing providing of at least one further stimulation signal 28 after causing providing of the at least one stimulation signal 26 based, at least in part, on the determined electrical impedance.

The at least one further stimulation signal 28 can comprise signal(s) as described in relation to the at least one stimulation signal 26. Accordingly, the description of the at least one stimulation signal 26 can apply to the at least one further stimulation signal 28.

The at least one further stimulation signal 28 can be similar to the at least one stimulation signal 26.

The at least one further stimulation signal 28 can be different to the at least one stimulation signal 26.

Accordingly, in some examples, a plurality of stimulation signals 26, 28 can be provided based, at least in part, on the determined electrical impedance. In other words, a plurality of stimulation signals 26, 28 can be provided based, at least in part, on a single calibration.

In some examples, method 300 comprises determining at least one user input configured to start calibration and wherein determining a touch 12 on a surface 14 of a device 16 is based, at least in part, on the at least one user input.

Any suitable user input can be used. In some examples, the touch 12 on the surface 14 of the device 16 can form at least a part of the user input.

The user input and/or touch 12 can be configured to provide an indication of an expected and/or intended user-device interaction.

By way of example, reference is made to FIG. 6.

FIG. 6 illustrates example scenarios in which a user touches a surface 14 of a device 16 with a portion of his/her/their body 18. In the illustrated example, the portion of the user's body 18 is a finger.

In the example of FIG. 6, the length of contact between the finger and the surface 14 of the device 18 is intended to indicate the user's intended interaction with the device 16. This can be considered user-defined calibration.

As illustrated in the example of FIG. 9, in examples where the user is interacting with the sensing/stimulation surface 14 with his/her/their finger, depending on the user's intended interaction, the contact with the surface 14 can be rapid (as a dab on the surface 14, less than 1 second duration, left portion of FIG. 9), normal (as a press on the surface 14, approximately 1 second, middle portion of FIG. 9), and slow (as a hold on the surface 14, for more than 1 second, right portion of FIG. 9).

However, in some examples, based, at least in part, on the user's finger condition at the time of calibration (for example start of the usage of a device 16), the user can 1) Intentionally/consciously define how fast he/she will interact with the surface 14 (for example, through a dab, press or hold) or 2) let the apparatus 10 autonomously collect data on how he/she/they have been interacting with the screen and determine the average contact duration, then provide the necessary impedance correction for stimulation.

As an example, in a first scenario, the user expects a rapid "dabbing" type of interaction with a mobile screen, so he/she/they intentionally select a calibration routine (left portion of FIG. 9) to expect such response time.

In some examples, the calibration routine requires the user to perform the dabbing action at least 1 time. In examples, a higher number of dabbing actions improves measurement accuracy.

In some examples, the electrical impedance, which in examples can be considered transducer-skin impedance, is determined as a calibrated input and stored and processed for used in providing at least one stimulation signal 26.

In some examples, since the sensor and stimulator are coupled, the impedance for the type of expected contact is consistent throughout, allowing the proper adjustment of stimulation parameters (for example amplitude, cycle, frequency) according to the determined electrical impedance.

In some examples, at any suitable time, if the user "felt" the stimulation intensity is off or inaccurate, the user can re-calibrate based on the interaction style and mode intended, by simply "dabbing", for example, to start the method which can be considered a calibration routine.

This can be performed as many times as needed for the user to define how any expected user finger behavior, for example, should be recognized.

In some examples, the user does not intentionally start the method, which can be considered an input calibration routine, but the method 300 for possible stimulation needs can be autonomously performed.

The presence and duration of a contact with the portion of the user's body 18 can be dynamically detected, for example over a period of a defined time window (for example milliseconds - seconds), an average impedance over a predefined number of incidents based on the user's interaction mode with the surface 14 can be determined.

This impedance information can be automatically inputted as a calibration input for the providing of at least one stimulation signal 16, so that a "default" system-anticipated compensation parameter is used to intelligently stimulate for the intended sensation.

In some examples, this autonomous operation can run continuously in the background or be performed periodically or just once. In examples, this can depend on one or more factors, for example user selection, computation power requirement, power usage conservation, and so on.

For applications where a user does not expect frequent or precise stimulation, this autonomous calibration mode can be performed just once. However, in applications (for example. interactive gaming), where the user expects frequent and accurate sensation feedback, then dynamic autonomous calibration can be performed.

This provides adaptability, since, for example, as the device 16, such as a cell phone, heats up, the finger moisture content also varies, and for the most accurate delivery of sensory and stimulatory responses, dynamic calibration can be considered optimal.

Examples of the disclosure are advantageous and/or provide technical benefits.

For example, examples of the disclosure provide efficient calibration for electrotactile stimulation based on a determined electrical impedance, rather than for example, electrical resistance, of a portion of a user's body.

For example, examples, of the disclosure provide for separate calibration and stimulation signals which allows the stimulation signals to be unconstrained by requirements for calibration. For example, if a stimulation signal were used also as a calibration signal, this would limit the form and functionality of the stimulation.

For example, examples of the disclosure provide for a calibration to be used in relation to a plurality of separate stimulation signals.

Fig 7A illustrates an example of a controller 730. The controller 730 can be used in an apparatus, such as an apparatus 10 of FIG. 1 and/or FIG. 2. In some examples, controller 730 can be considered an apparatus.

Implementation of a controller 730 may be as controller circuitry. The controller 730 may be implemented in hardware alone, have certain aspects in software including firmware alone or can be a combination of hardware and software (including firmware).

As illustrated in Fig 7A the controller 730 may be implemented using instructions that enable hardware functionality, for example, by using executable instructions of a computer program 736 in a general-purpose or special-purpose processor 732 that may be stored on a computer readable storage medium (disk, memory etc) to be executed by such a processor 732.

The processor 732 is configured to read from and write to the memory 734. The processor 732 may also comprise an output interface via which data and/or commands are output by the processor 732 and an input interface via which data and/or commands are input to the processor 732.

The memory 734 stores a computer program 736 comprising computer program instructions (computer program code) that controls the operation of the apparatus when loaded into the processor 732. The computer program instructions, of the computer program 736, provide the logic and routines that enables the apparatus to perform the methods illustrated in FIG. 3 and/or as described herein. The processor 732 by reading the memory 734 is able to load and execute the computer program 736.

The apparatus therefore comprises:
at least one processor 732; and
at least one memory 734 including computer program code
the at least one memory 734 and the computer program code configured to, with the at least one processor 732, cause the apparatus at least to perform:
   determining a touch on a surface of a device by a portion of a user's body;
   causing, based at least in part on the determined touch, providing of at least one calibration signal to at least one electrode, wherein the at least one calibration signal comprises an alternating waveform;
   determining, based at least in part on the at least one calibration signal, an electrical impedance of the portion of the user's body; and
   causing providing of at least one stimulation signal to the portion of the user's body, wherein the at least one stimulation signal is configured based, at least in part, on the determined electrical impedance.

As illustrated in Fig 7A, the computer program 736 may arrive at the apparatus via any suitable delivery mechanism 762. The delivery mechanism 762 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 736. The delivery mechanism may be a signal configured to reliably transfer the computer program 736. The apparatus may propagate or transmit the computer program 736 as a computer data signal.

Computer program instructions for causing an apparatus to perform at least the following or for performing at least the following:
determining a touch on a surface of a device by a portion of a user's body;
causing, based at least in part on the determined touch, providing of at least one calibration signal to at least one electrode, wherein the at least one calibration signal comprises an alternating waveform;
determining, based at least in part on the at least one calibration signal, an electrical impedance of the portion of the user's body; and
causing providing of at least one stimulation signal to the portion of the user's body, wherein the at least one stimulation signal is configured based, at least in part, on the determined electrical impedance.

The computer program instructions may be comprised in a computer program, a non-transitory computer readable medium, a computer program product, a machine readable medium. In some but not necessarily all examples, the computer program instructions may be distributed over more than one computer program.

Although the memory 762 is illustrated as a single component/circuitry it may be implemented as one or more separate components/circuitry some or all of which may be integrated/removable and/or may provide permanent/semi-permanent/ dynamic/cached storage.

In examples, the memory 734 comprises a random-access memory 758 and a read only memory 760. In examples, the computer program 736 can be stored in the read only memory 760.

Although the processor 732 is illustrated as a single component/circuitry it may be implemented as one or more separate components/circuitry some or all of which may be integrated/removable. The processor 732 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the FIG. 3 and/or as described herein may represent steps in a method and/or sections of code in the computer program 736. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Thus, the apparatus can comprise means for:
determining a touch on a surface of a device by a portion of a user's body;
causing, based at least in part on the determined touch, providing of at least one calibration signal to at least one electrode, wherein the at least one calibration signal comprises an alternating waveform;
determining, based at least in part on the at least one calibration signal, an electrical impedance of the portion of the user's body; and
causing providing of at least one stimulation signal to the portion of the user's body, wherein the at least one stimulation signal is configured based, at least in part, on the determined electrical impedance.

In examples, an apparatus can comprise means for performing one or more methods, and/or at least part of one or more methods, as disclosed herein.

In examples, an apparatus can be configured to perform one or more methods, and/or at least part of one or more methods, as disclosed herein.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

I/we claim:

## Claims

1. An apparatus comprising means for:
determining a touch on a surface of a device by a portion of a user's body;
causing, based at least in part on the determined touch, providing of at least one calibration signal to at least one electrode, wherein the at least one calibration signal comprises an alternating waveform;
determining, based at least in part on the at least one calibration signal, an electrical impedance of the portion of the user's body; and
causing providing of at least one stimulation signal to the portion of the user's body, wherein the at least one stimulation signal is configured based, at least in part, on the determined electrical impedance.

2. An apparatus as claimed in claim 1, wherein the at least one calibration signal comprises a plurality of discrete time- separated alternating waveforms.

3. An apparatus as claimed in claim 2, wherein determining an electrical impedance of the portion of the user's body comprises determining an average electrical impedance of the portion of the user's body based, at least in part, on the plurality of discrete time-separated alternating waveforms.

4. An apparatus as claimed in any preceding claim, wherein the at least one calibration signal comprises an alternating waveform having a frequency in the range 40 to 60 kHz and a duration of up to 100 milliseconds.

5. An apparatus as claimed in any preceding claim, wherein the at least one calibration signal is configured for performance of electrical impedance spectroscopy of the portion of the user's body.

6. An apparatus as claimed in any preceding claim, wherein the at least one stimulation signal is configured to stimulate one or more predetermined nerve endings in the portion of the user's body.

7. An apparatus as claimed in any preceding claim, wherein the means are configured to:
cause providing of at least one further stimulation signal after causing providing of the at least one stimulation signal, the at least one further stimulation signal based, at least in part, on the determined electrical impedance.

8. An apparatus as claimed in any preceding claim, wherein the means are configured to determine at least one user input configured to start calibration and wherein determining a touch on a surface of a device is based, at least in part, on the at least one user input.

9. An apparatus as claimed in any preceding claim, wherein causing providing of at least one calibration signal comprises varying one or more characteristics of the alternating waveform.

10. An electronic device comprising an apparatus as claimed in at least one of claims 1 to 9 and at least one surface configured for user touch.

11. A method comprising:
determining a touch on a surface of a device by a portion of a user's body;
causing, based at least in part on the determined touch, providing of at least one calibration signal to at least one electrode, wherein the at least one calibration signal comprises an alternating waveform;
determining, based at least in part on the at least one calibration signal, an electrical impedance of the portion of the user's body; and
causing providing of at least one stimulation signal to the portion of the user's body, wherein the at least one stimulation signal is configured based, at least in part, on the determined electrical impedance.

12. A method as claimed in claim 11, wherein the at least one calibration signal comprises a plurality of discrete time-separated alternating waveforms.

13. A method as claimed in claim 11 or 12, the method comprising:
causing providing of at least one further stimulation signal after causing providing of the at least one stimulation signal, the at least one further stimulation signal based, at least in part, on the determined electrical impedance.

14. A computer program comprising instructions for causing an apparatus to perform:
determining a touch on a surface of a device by a portion of a user's body;
causing, based at least in part on the determined touch, providing of at least one calibration signal to at least one electrode, wherein the at least one calibration signal comprises an alternating waveform;
determining, based at least in part on the at least one calibration signal, an electrical impedance of the portion of the user's body; and
causing providing of at least one stimulation signal to the portion of the user's body, wherein the at least one stimulation signal is configured based, at least in part, on the determined electrical impedance.

15. A computer program as claimed in claim 14, the computer program comprising instructions for causing an apparatus to perform:
causing providing of at least one further stimulation signal after causing providing of the at least one stimulation signal, the at least one further stimulation signal based, at least in part, on the determined electrical impedance.
